# EUROPEAN PATENT APPLICATION

(11) **EP 4 787 684 A1**
(43) Date of publication of application: **05.08.2026**
(21) Application number: 24891519.1
(22) Date of filing: 15.11.2024
(51) Int. Cl.: H02K 15/02, B21D 28/02, H01F 41/02, H02K 15/121

(54) **MANUFACTURING APPARATUS AND MANUFACTURING METHOD FOR LAMINATED IRON CORE**

(30) Priority: 16.11.2023 JP 2023195393
(71) Applicant: Nippon Steel Corporation, Tokyo 100-8071 (JP)
(72) Inventor: TAKEDA, Kazutoshi, Tokyo 100-8071 (JP); FUKUCHI, Minako, Tokyo 100-8071 (JP); KATAOKA, Takashi, Tokyo 100-8071 (JP)
(74) Representative: Vossius & Partner Patentanwälte Rechtsanwälte mbB
(86) International application number: PCT/JP2024/040686
(87) International publication number: WO 2025/105484

(57) **Abstract**

Provided are a manufacturing device for laminated core and a manufacturing method for laminated core that can suppress unnecessary spreading of adhesive and reduce the risk of the adhesive entering unintended areas. The manufacturing device 1 for a laminated core according to the present invention is a manufacturing device 1 for manufacturing a laminated core 4 in which core sheets 3 having a predetermined shape are formed by punching from a steel sheet 2 and a predetermined number of the core sheets 3 are laminated and bonded, the manufacturing device 1 including: an adhesive applicator 14 that applies an adhesive 140 to portions 2a of the steel sheet 2 corresponding to the core sheets 3; and a punching portion 15 including a die including an upper die 130 and a lower die 131, the punching portion 15 being configured to punch out the core sheets 3 from the steel sheet 2 after the adhesive 140 has been applied by the adhesive applicator 14, wherein the upper die 130 or the lower die 131 comprises a recess 50 disposed at a position corresponding to the portion 2a where the adhesive 140 has been applied, and a vent 51 that communicates an internal space of the recess 50 with the outside of the upper die 130 or the lower die 131.

## Description

### [Technical Field]

The present invention relates to a manufacturing device for a laminated core and a manufacturing method for the same, in which core sheets having a predetermined shape are punched out from a steel sheet and a laminated core is manufactured by laminating and bonding a predetermined number of the core sheets.

### [Background Art]

Laminated cores in which a predetermined number of core sheets are laminated are used as cores in rotating electrical machines. The core sheets are joined together by various methods. When caulking or welding is used as the joining method, the magnetic characteristics of the laminated core may be deteriorated due to mechanical or thermal stress during joining, as well as interlayer short circuits, resulting in the laminated core failing to achieve its full performance. For this reason, as shown in Patent Literature 1 below and the like, laminating and bonding of core sheets has been explored.

Patent Literature 1 describes a manufacturing device for a laminated core including: an upper die and a lower die; a progressive die means for sequentially punching core sheets from a strip-shaped thin steel sheet fed intermittently; and an adhesive application means provided within the lower die for applying an adhesive to portions of the strip-shaped thin steel sheet corresponding to the core sheets. The adhesive application means includes an adhesive discharge portion including a nozzle block with a plurality of discharge holes opened on its upper surface, and an adhesive feed portion that discharges the adhesive from the plurality of discharge holes by feeding the adhesive to the adhesive discharge portion at a predetermined pressure. The adhesive application means further includes a reciprocating drive portion that moves the adhesive discharge portion forward and backward relative to the adhesive application surface of the strip-shaped thin steel sheet. By moving the adhesive discharge portion forward and backward via the reciprocating drive portion, the execution of the adhesive application process by the adhesive discharge portion is switched on or off. At the position of the core sheet to which no adhesive has been applied, a laminated core consisting of a predetermined number of core sheets is separated from the group of core sheets.

### [Citation List]

### [Patent Literature]

[Patent Literature 1] Japanese Patent Application Publication No. 2017-216873 A

### [Summary of Invention]

### [Technical Problem]

When punching core sheets after applying the adhesive, as in the conventional device described in Patent Literature 1 described above, air pressure acts on the adhesive due to the relative movement between the steel sheet and the die, which may cause the adhesive to spread unnecessarily. If the adhesive spreads unnecessarily, there is a risk that it will penetrate into unintended areas. This can lead to increased friction during punching, dimensional inaccuracies, and/or accelerated wear of the cutting tools, and the like. In particular, as demand for rotating electrical machines increases, there is a desire to increase the punching speed of core sheets; however, as the punching speed increases, that unnecessary spreading of the adhesive becomes more pronounced.

The present invention has been made to solve the above problems, and one of objects of the present invention is to provide a manufacturing device for a laminated core and a manufacturing method for a laminated core that can suppress the unnecessary spreading of the adhesive and reducing the risk of the adhesive entering unintended areas.

### [Solution to Problem]

In one embodiment, the manufacturing device for a laminated core according to the present invention is a manufacturing device for a laminated core in which core sheets having a predetermined shape are formed by punching from a steel sheet and a predetermined number of core sheets are laminated and bonded, the manufacturing device comprising: an adhesive applicator that applies an adhesive to a portion of the steel sheet corresponding to the core sheets; and a punching portion comprising a die including an upper die and a lower die, the punching portion being configured to punch out the core sheets from the steel sheet after the adhesive has been applied by the adhesive applicator, wherein the upper die or the lower die comprises a recess disposed at a position corresponding to the portion where the adhesive has been applied, and a vent that communicates an internal space of the recess with the outside of the upper die or the lower die.

Also, in one embodiment, the manufacturing method for a laminated core according to the present invention includes manufacturing a laminated core using the above manufacturing device for a laminated core.

### [Advantageous Effects of Invention]

According to one embodiment of the manufacturing device for a laminated core and the manufacturing method for laminated core of the present invention, the upper die or the lower die includes a recess disposed at a position corresponding to the portion where the adhesive has been applied, and a vent that communicates the internal space of the recess with the outside of the upper die or the lower die. Therefore, unnecessary spreading of the adhesive can be suppressed and the risk of the adhesive entering unintended areas can be reduced. This configuration is particularly useful when increasing the punching speed.

### [Brief Description of Drawings]

[Fig. 1] Fig. 1 is an explanatory view showing a manufacturing device for a laminated core according to Embodiment 1 of the present invention.
[Fig. 2] Fig. 2 is an explanatory view showing the adhesive applicator and the upper die of Fig. 1.
[Fig. 3] Fig. 3 is an explanatory view showing the spreading of adhesive when the vent of Fig. 2 is not provided.
[Fig. 4] Fig. 4 is an explanatory view showing the upper die and the lower die of Fig. 1 in more detail.
[Fig. 5] Fig. 5 is an explanatory view showing a state in which the upper die has been lowered to the position where the steel sheet is clamped between the blank holder and the die of Fig. 4.
[Fig. 6] Fig. 6 is an explanatory view showing a state in which the upper die has been lowered further from the state shown in Fig. 5.
[Fig. 7] Fig. 7 is an explanatory view showing the adhesive applicator and the upper die in the manufacturing device for a laminated core according to Embodiment 2 of the present invention.

### [Description of Embodiments]

Hereinafter, embodiments of the invention will be specifically described with reference to the drawings. The invention is not limited to each embodiment, and components can be modified and embodied without departing from the spirit of the invention. Further, various inventions can be formed by appropriately combining a plurality of components disclosed in each embodiment. For example, some components may be removed from all of the components shown in the embodiments. Furthermore, the components of different embodiments may be optionally combined.

### Embodiment 1.

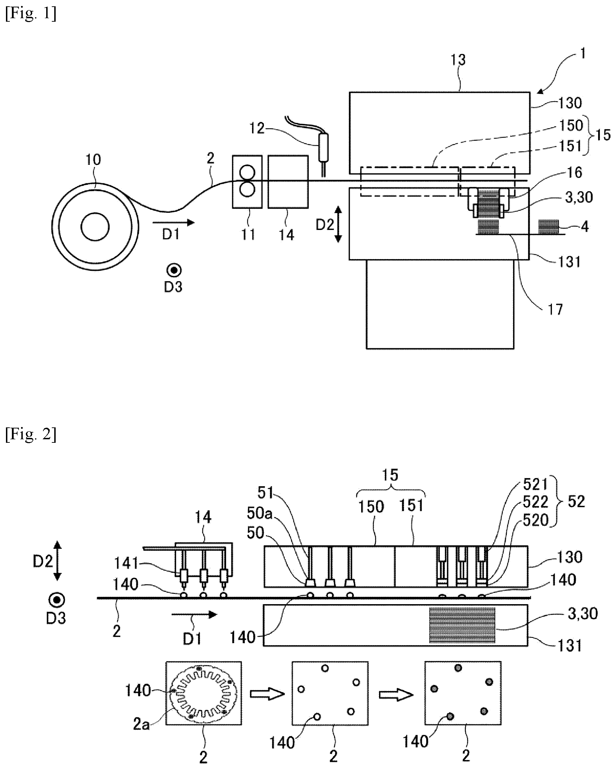

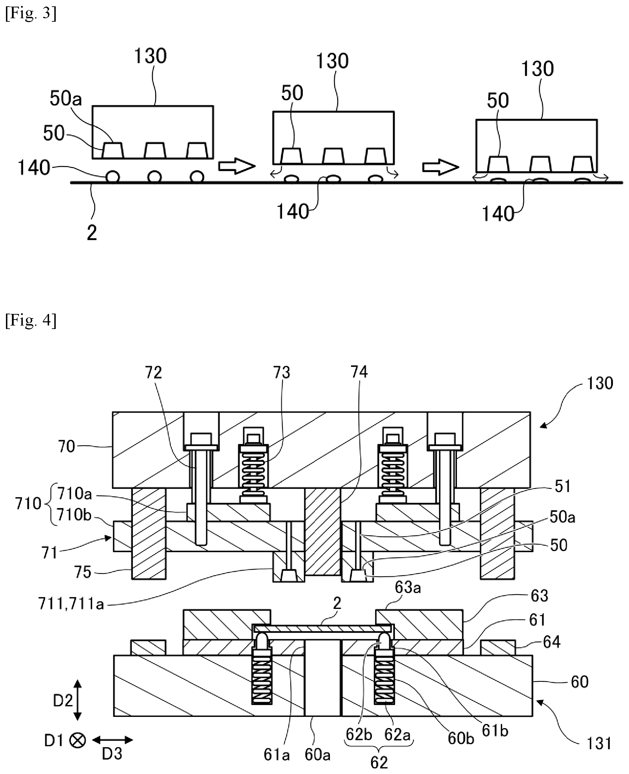

Fig. 1 is an explanatory view showing a manufacturing device 1 for a laminated core 4 according to Embodiment 1 of the present invention, Fig. 2 is an explanatory view showing an adhesive applicator 14 and an upper die 130 of Fig. 1, and Fig. 3 is an explanatory view showing the spreading of an adhesive 140 when a vent 51 of Fig. 2 is not provided. The manufacturing device 1 is a manufacturing device for a laminated core 4 in which core sheets 3 having a predetermined shape are formed by punching from a steel sheet 2 and a predetermined number of the core sheets 3 is laminated and bonded.

As shown in Fig. 1, the manufacturing device 1 according to this embodiment may include a reel 10, a feeder 11, an oil applicator 12, and press equipment 13. The reel 10 is provided with a coil of the steel sheet 2. The steel sheet 2 drawn from the reel 10 is fed through the feeder 11 to the press equipment 13. The oil applicator 12 is disposed between the feeder 11 and the press equipment 13, and feeds a pressing oil to the surface of the steel sheet 2 before it is introduced into the press equipment 13. The press equipment 13 includes an upper die 130 and a lower die 131, and the core sheet 3 is punched out from the steel sheet 2 by the upper die 130 and the lower die 131.

The manufacturing device 1 according to this embodiment includes an adhesive applicator 14, a punching portion 15, a laminating portion 16, and a conveyor 17.

The adhesive applicator 14 applies an adhesive 140 (see Fig. 2) to a portion 2a of a steel sheet 2 corresponding to core sheet 3. The adhesive applicator 14 may be incorporated into press equipment 13 (upper die 130 or lower die 131), but as shown in Figs. 1 and 2, it may be disposed upstream of the press equipment 13 in a feed direction D1 of the steel sheet 2. In the illustrated embodiment, the adhesive applicator 14 is disposed upstream of an oil applicator 12 and downstream of a feeder 11.

The adhesive applicator 14 may apply the adhesive 140 to the surface of the steel sheet 2. As shown in Fig. 2, the adhesive applicator 14 may apply the adhesive 140 to the upper face of the steel sheet 2. The adhesive applicator 14 may spray the adhesive 140 onto the upper face of the steel sheet 2 from a nozzle 141 positioned above the steel sheet 2. In the lower left portion of Fig. 2, the portion 2a corresponding to the core sheet 3 is indicated by a thin line. The core sheet 3 may include an annular yoke and a plurality of teeth projecting radially inward from the yoke at intervals in the circumferential direction of the yoke. While the adhesive 140 may be applied at any position, in the illustrated embodiment, the adhesive 140 is applied to a plurality of positions on the yoke spaced apart from each other in the circumferential direction of the yoke. The adhesive 140 may be applied to fewer positions than the number of teeth.

The punching portion 15 includes a die including an upper die 130 and a lower die 131, and is a portion for punching out the core sheets 3 from the steel sheet 2 after the application of the adhesive 140 by the adhesive applicator 14. The punching of the steel sheet 2 by the punching portion 15 may be performed in multiple stages. That is, the steel sheet 2 may be sequentially punched in a feed direction D1 of the steel sheet 2 toward the final core sheet 3. The punching portion 15 may include a pre-processing portion 150 that punches out portions other than the outer shape of the core sheet 3 from the steel sheet 2 in one or more steps, and an outer shape punching portion 151 that punches out the outer shape of the core sheet 3 from the steel sheet 2 after the punching performed by the pre-processing portion 150. The outer shape punching by the outer shape punching portion 151 is performed last, and the core sheet 3 is punched out from the steel sheet 2 when the outer shape of the core sheet 3 is punched out.

The laminating portion 16 is a portion for laminating and bonding the core sheets 3 to which an adhesive 140 has been applied to form the group of core sheets 30. The laminating portion 16 may be incorporated into the lower die 131 at the position where the outer shape punching is performed by the punching portion 15. The group of core sheets 30 consists of a plurality of core sheets 3 laminated and bonded together. The core sheet 3 is dropped onto the group of core sheets 30 formed by previously punched core sheets 3, and is closely pressed against and bonded to the upper surface of the group of core sheets 30 by the weight of the core sheet 3 itself or subsequent core sheets 3.

The conveyor 17 is a device for conveying the laminated core 4 separated from the group of core sheets 30. The laminated core 4 may be removed from the lower die 131 by the conveyor 17.

The laminated core 4 may be separated from the group of core sheets 30 by any suitable method. For example, by preventing the adhesive applicator 14 from not apply the adhesive 140 to one of the plurality of core sheets 3, the group of core sheets 30 may be made separable at the core sheet 3 to which the adhesive 140 has not been applied. When the core sheet 3 to which the adhesive 140 is not applied is referred to as a first core sheet, and the core sheet 3 to which the adhesive 140 is applied is referred to as a second core sheet, the laminated core 4 may include one first core sheet and a plurality of second core sheets laminated and bonded above or below the first core sheet. Alternatively, the adhesive applicator 14 may apply the adhesive 140 to all the core sheets 3, and the laminated core 4 may be physically separated from the group of core sheets 30.

Here, as shown in the upper portion of Fig. 2, the upper die 130 according to this embodiment includes a recess 50 disposed at a position corresponding to the portion 2a where the adhesive 140 is applied, and a vent 51 that communicates an internal space of the recess 50 with the outside of the upper die 130.

The recess 50 is intended to form a space to prevent the upper die 130 from coming into contact with the adhesive 140, and may be disposed so that, when viewed along a separation direction D2 (up and down direction) of the upper die 130 and the lower die 131 at the position where the steel sheet 2 is punched, it overlaps with the portion 2a where the adhesive 140 is applied. Although, in the illustrated embodiment, a rear wall 50a to which the vent 51 is connected is shown as being provided in the recess 50, the rear wall 50a may be omitted, and the vent 51 may be connected to the entire rear end of the recess 50. In other words, the inner diameter of the rear end of the recess 50 and the inner diameter of the vent 51 may be the same, and the recess 50 and the vent 51 may together form a through hole or a passage.

As described above, the core sheet 3 is punched from the steel sheet 2 by the upper die 130 and the lower die 131. If the vent 51 were not provided in the upper die 130, as shown in Fig. 3, air pressure acting on the adhesive 140 due to the relative movement between the upper die 130 and/or the lower die 131 and the steel sheet 2 could cause the adhesive 140 to spread unnecessarily. If the adhesive 140 spreads unnecessarily, there is a risk that it will penetrate into unintended areas. This can lead to increased friction during punching, dimensional inaccuracies, and/or accelerated wear of the cutting tools, and the like. In particular, as demand for rotating electrical machines increases, there is a desire to increase the punching speed of the core sheets 3, and as the punching speed increases, this unnecessary spreading of the adhesive 140 becomes more pronounced.

In contrast, by providing the vent 51 in the upper die 130 as in the manufacturing device 1 according to this embodiment, when the upper die 130 is lowered toward the lower die 131, the air inside the recess 50 can be vented to the outside of the upper die 130 through the vent 51. This suppresses the unnecessary spreading of the adhesive 140 and reduces the risk of the adhesive 140 entering unintended areas. Consequently, increased friction during punching can be avoided, dimensional deviations can be suppressed, and/or the risk of accelerated tool wear can be avoided. This configuration is particularly useful when increasing the punching speed.

The vent 51 extends linearly along the separation direction D2 of the upper die 130 and the lower die 131. The vent 51 may extend linearly upward from the rear wall 50a of the recess 50.

The recess 50 and the vent 51 may be provided in the pre-processing portion 150. By providing the recess 50 and the vent 51 in the pre-processing portion 150, unnecessary spreading of the adhesive 140 can be suppressed before reaching the outer shape punching portion 151.

The outer shape punching portion 151 may include a pressing portion 52 that spreads the adhesive 140 when punching out the outer shape of the core sheet 3. The pressing portion 52 can increase the area of the adhesive 140 on the core sheet 3, as well as reduce the thickness of the adhesive 140. By spreading the adhesive 140 with the pressing portion 52, the core sheets 3 can be more reliably laminated and bonded in the laminating portion 16. Furthermore, the gap between the core sheets 3 can be reduced.

The pressing portion 52 may include a pressing portion body 520 making up the portion directly pressed against the adhesive 140. The pressing portion body 520 is preferably made of a material capable of suppressing adhesion of the adhesive 140, such as polytetrafluoroethylene (PTFE). The pressing portion body 520 may be fixed to the upper die 130, or may be provided so as to be displaceable relative to the upper die 130. In the illustrated embodiment, the pressing portion 52 includes a position adjustment means 521 for adjusting the height position of the pressing portion body 520. The position adjustment means 521 may be mounted on the upper die 130. By adjusting the height position of the pressing portion body 520, the pressing force exerted by the pressing portion body 520 against the adhesive 140 can be adjusted. The position adjustment means 521 may be configured, for example, by a screw or the like mounted so as to be movable forward and backward relative to the upper die 130. Furthermore, the pressing portion 52 may include a buffer mechanism 522 incorporated into the connection between the pressing portion body 520 and the position adjustment means 521. The buffer mechanism 522 may be composed of a spring or a resin with a relatively low elastic modulus, and incorporating the buffer mechanism 522 enables the pressing portion 52 to provide a buffering effect.

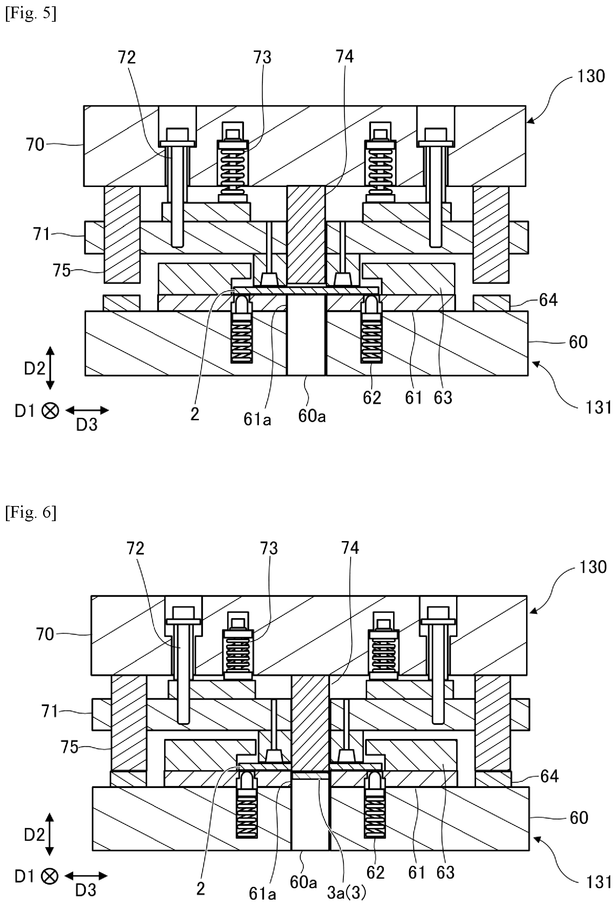

Next, Fig. 4 is an explanatory view showing the upper die 130 and the lower die 131 of Fig. 1 in more detail, Fig. 5 is an explanatory view showing a state in which the upper die 130 has been lowered to the position where the steel sheet 2 is clamped by the blank holder 71 and the die 61 of Fig. 4, and Fig. 6 is an explanatory view showing a state in which the upper die 130 has been lowered further from the state shown in Fig. 5. It should be noted that Figs. 4 to 6 show the upper die 130 and the lower die 131 in the pre-processing portion 150 of Fig. 1. The configuration of the upper die 130 and the lower die 131 in the outer shape punching portion 151 may be the same as that of the upper die 130 and the lower die 131 in the pre-processing portion 150, with the exception that a pressing portion 52 (see Fig. 2) is provided in place of the recess 50 and the vent 51.

As shown in Fig. 4, the lower die 131 may include a lower die set 60, a die 61, a material lifter 62, a material stock guide 63, and a lower die height post 64.

The lower die set 60 is disposed at the lower portion of the lower die 131. The die 61 is fixed to the upper face of the lower die set 60. The die 61 is provided with a punch hole 61a into which a punch 74 of the upper die 130, described below, is pressed together with a portion of the steel sheet 2. The lower die set 60 is provided with a through hole 60a communicating with the punch hole 61a.

The material lifter 62 is provided to lift the steel sheet 2 above the die 61. The steel sheet 2 is conveyed downstream while being lifted by the material lifter 62. The material lifters 62 are disposed on both sides of the punch hole 61a and the through hole 60a, and may lift both side portions of the steel sheet 2 in a width direction D3.

The material lifter 62 may include a lifter spring 62a housed in storage holes 60b, 61b provided in the lower die set 60 and the die 61, and a pin 62b that is biased upward by the lifter spring 62a such that at least the tip portion of the pin 62b protrudes upward from the storage holes 60b, 61b. The steel sheet 2 is lifted by the tip portion of the pin 62b, which is biased upward by the lifter spring 62a, being pressed against the lower face of the steel sheet 2.

The material stock guide 63 serves to restrict the upward movement of the steel sheet 2. The material stock guide 63 has an overhang portion 63a arranged to cover the upper sides of both side portions of the steel sheet 2, and the upward movement of the steel sheet 2 is restricted by the upper face of the steel sheet 2 being pressed against the lower face of the overhang portion 63a.

The lower die height post 64 serves to determine the bottom dead center of the punch 74 together with the upper die height post 75 of the upper die 130 described below. The lower die height post 64 may be erected on the upper face of the lower die set 60. The lower die height post 64 may be disposed on an outer side of the die 61, the material lifter 62, and the material stock guide 63 in the width direction D3 of the steel sheet 2.

As shown in Fig. 4, the upper die 130 includes an upper die set 70, a blank holder 71, blank holder suspension bolts 72, blank holder springs 73, a punch 74, and an upper die height post 75.

The upper die set 70 is positioned at the upper portion of the upper die 130. The blank holder 71 is suspended from the upper die set 70 by the blank holder suspension bolts 72. The blank holder suspension bolts 72 are attached to the upper die set 70 so as to allow the blank holder 71 to move toward the upper die set 70. The blank holder springs 73 urges the blank holder 71 downward.

The blank holder 71 is pressed against the steel sheet 2. The recess 50 and the vent 51 may be provided in the blank holder 71. By providing the recess 50 and the vent 51 in the blank holder 71, unnecessary spreading of the adhesive 140 can be more reliably suppressed, and the risk of the adhesive 140 entering unintended areas can be more reliably reduced.

The blank holder 71 may include a base 710 and a surface layer 711 that is detachably mounted on the base 710 and pressed against the steel sheet 2, and the recess 50 may be provided in the surface layer 711, and at least a portion of the vent 51 may be provided in the base 710. By providing the recess 50 in the detachable surface layer 711, the portion where the recess 50 is provided can be easily attached and detached, thereby improving maintainability. Furthermore, it is preferable that the recess 50 be positioned and sized to precisely cover each individual adhesive 140 adhering to the steel sheet 2. Variations may occur in the amount and distribution of the adhesive 140 adhering to the steel sheet 2. By providing the recess 50 in the detachable surface layer 711, the position and size of the recess 50 can be easily adjusted, allowing for flexible adaptation to variations in the amount and distribution of the adhesive 140.

The surface layer 711 may be configured so that it can be attached to the base 710 and removed from the base 710 without damaging the base 710 and/or the surface layer 711, for example, by means of fastening or engagement.

The base 710 may include a stripper plate 710a disposed at the upper portion of the blank holder 71, and a stripper 710b fixed to the lower face of the stripper plate 710a. The surface layer 711 may include a stripper block 711a attached to the lower face of the stripper 710b. The blank holder springs 73 may be connected to the stripper plate 710a. The blank holder suspension bolts 72 may pass through the stripper plate 710a and extend to the stripper 710b. The stripper block 711a may be positioned at least partially around the outer periphery of the punch 74.

In the illustrated embodiment, the recess 50 is provided in the stripper block 711a, and the vent 51 is provided in the stripper block 711a and the stripper 710b. The vent 51 extends upward from the rear wall 50a of the recess 50 and opens onto the upper face of the stripper 710b. The space above the stripper 710b communicates with the outside (atmosphere) of the upper die 130.

The punch 74 protrudes downward from the lower face of the upper die set 70. The punch 74 is fixedly provided relative to the upper die set 70. In other words, the blank holder 71 described above is provided so as to be displaceable relative to the punch 74. In this embodiment, the punch 74 forms a punching die that punches out the steel sheet 2 after the blank holder 71 has been pressed against the steel sheet 2.

The upper die height post 75 serves to determine the bottom dead center of the punch 74 together with the lower die height post 64 of the lower die 131 described above. The upper die height post 75 protrudes downward from the lower face of the upper die set 70. The upper die height post 75 may be disposed outside the stripper plate 710a, the stripper block 711a, the blank holder suspension bolts 72, the blank holder springs 73, and the punch 74 in the width direction D3 of the steel sheet 2. The upper die height post 75 may pass through the stripper 710b.

As shown in Fig. 4, the steel sheet 2 is lifted by the material lifter 62, and is intermittently fed downstream while the upper face of the steel sheet 2 is pressed against the lower face of the overhang portion 63a.

When the steel sheet 2 is punched by the punching portion 15, first, as shown in Fig. 5, the upper die 130 is lowered to a position where the steel sheet 2 is clamped between the blank holder 71 and the die 61. At this time, the steel sheet 2 is lowered while the lifter spring 62a is compressed by the pressure from the blank holder 71, and the steel sheet 2 is placed on the upper face of the lower die 131 (die 61).

Next, as shown in Fig. 6, the upper die 130 is further lowered. At this time, as the blank holder springs 73 are compressed, the punch 74 is further lowered while the blank holder 71 remains on the steel sheet 2, and the punch 74 is pushed into the punch hole 61a of the die 61 together with a portion of the steel sheet 2. The punching of the steel sheet 2 is performed by such pushing of the punch 74.

As described above, Figs. 4 to 6 show the upper die 130 and the lower die 131 in the pre-processing portion 150 of Fig. 1. In the pre-processing portion 150, scrap 3a is dropped through the through hole 60a of the lower die set 60. In the outer shape punching portion 151 where the outer shape of the core sheet 3 is punched from the steel sheet 2, the core sheet 3 is dropped through the through hole 60a of the lower die set 60.

After the scrap 3a or the core sheet 3 has been dropped through the through hole 60a, the upper die 130 is raised. At this time, the lifter spring 62a returns to its original position, lifting the steel sheet 2. In other words, in the manufacturing device 1 according to this embodiment, the steel sheet 2 is moved up and down accompanying the forming of the core sheets 3 by punching from the steel sheet 2.

### Embodiment 2.

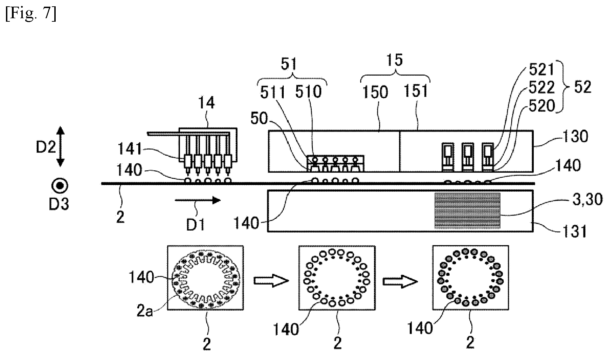

Next, Fig. 7 is an explanatory view showing the adhesive applicator 14 and the upper die 130 in the manufacturing device 1 for the laminated core 4 according to Embodiment 2 of the present invention. Embodiment 1 has described the adhesive 140 being applied to a plurality of positions on the yoke that are spaced apart from each other in the circumferential direction of the yoke. However, alternatively or additionally, the adhesive 140 may be applied to the teeth. Furthermore, although Embodiment 1 has described the adhesive 140 being applied to fewer positions than the number of teeth, the adhesive 140 may also be applied to a number of positions equal to or greater than the number of teeth on each of the yoke and the teeth.

Furthermore, Embodiment 1 has described the vent 51 extending linearly along the separation direction D2 of the upper die 130 and the lower die 131. However, as shown in Fig. 7, the vent 51 may include a transverse hole 510 extending in a direction intersecting the separation direction D2 of the upper die 130 and the lower die 131.

A vertical hole 511 extending in the separation direction D2 of the upper die 130 and the lower die 131 may be interposed between the transverse hole 510 and the recess 50. Alternatively, the transverse hole 510 may be directly connected to the recess 50.

The transverse hole 510 may extend in the width direction D3 of the steel sheet 2. Alternatively or additionally, the transverse hole 510 may extend in the feed direction D1 of the steel sheet 2. The transverse hole 510 may extend horizontally or may extend at an angle to the horizontal. Other configurations are the same as those of Embodiment 1.

Embodiments 1 and 2 have described the adhesive applicator 14 applying the adhesive 140 to the upper face of the steel sheet 2. However, the adhesive applicator 14 may also apply the adhesive 140 to the lower face of the steel sheet 2. In this case, the recess 50 and the vent 51 may be provided in the lower die 131, and the vent 51 may communicate the internal space of the recess 50 with the outside of the lower die 131.

Furthermore, Embodiments 1 and 2 have described the blank holder 71 and the punching die (punch 74) being provided on the upper die 130. However, the blank holder 71 and the punching die (punch 74) may also be provided on the lower die 131.

The manufacturing method for a laminated core according to an embodiment of the present invention includes manufacturing the laminated core 4 using the manufacturing device 1 for a laminated core 4 described above. The manufacturing method for laminated core 4 is a method for manufacturing a laminated core 4 in which core sheets 3 having a predetermined shape are formed by punching from a steel sheet 2 and a predetermined number of core sheets 3 are laminated and bonded, the manufacturing method comprising: a step of applying an adhesive 140 to a portion 2a of the steel sheet 2 corresponding to the core sheets 3 using the adhesive applicator 14; and a step of punching the core sheets 3 from the steel sheet 2 using the punching portion 15 comprising a die including an upper die 130 and a lower die 131, after applying the adhesive 140 by the adhesive applicator 14, wherein the upper die 130 or the lower die 131 comprises a recess 50 disposed at a position corresponding to the portion 2a where the adhesive 140 has been applied, and a vent 51 that communicates an internal space of the recess 50 with the outside of the upper die 130 or the lower die 131.

While the preferred embodiments of the invention have been described above in detail with reference to the drawings, the present invention is not limited to such embodiments. It is obvious that a person skilled in the art to which this invention belongs can arrive at various variations or modifications in the scope of the technical idea recited in the claims, and it is understood that they also belong to the technical scope of this invention.

The inventions disclosed in this specification can also be described as follows.
[1] A manufacturing device for laminated core for manufacturing a laminated core in which core sheets having a predetermined shape are formed by punching from a steel sheet and a predetermined number of the core sheets are laminated and bonded, the manufacturing device comprising:
   an adhesive applicator that applies an adhesive to portions of the steel sheet corresponding to the core sheets; and
   a punching portion comprising a die including an upper die and a lower die, the punching portion being configured to punch out the core sheets from the steel sheet after the adhesive has been applied by the adhesive applicator,
   wherein the upper die or the lower die comprises a recess disposed at a position corresponding to the portion where the adhesive has been applied, and a vent that communicates an internal space of the recess with the outside of the upper die or the lower die.
[2] The manufacturing device for a laminated core according to [1],
   wherein the upper die or the lower die comprises a blank holder pressed against the steel sheet, and a punching die that is provided so as to be displaceable relative to the blank holder and punches out the steel sheet after the blank holder has been pressed against the steel sheet, and
   wherein the recess and the vent are provided in the blank holder,
[3] The manufacturing device for a laminated core according to [2],
   wherein the blank holder comprises a base and a surface layer detachably mounted on the base and pressed against the steel sheet, and
   wherein the recess is provided in the surface layer, and at least a portion of the vent is provided in the base.
[4] The manufacturing device for a laminated core according to any one of [1] to [3], wherein the vent comprises a transverse hole extending in a direction intersecting a separation direction of the upper die and the lower die.
[5] The manufacturing device for a laminated core according to any one of [1] to [4],
   wherein the adhesive applicator applies the adhesive to an upper face of the steel sheet, and
   wherein the recess and the vent are provided in the upper die.
[6] The manufacturing device for a laminated core according to any one of [1] to [5], wherein the punching portion comprises a pre-processing portion that punches out portions other than an outer shape of the core sheet from the steel sheet in one or more steps, and an outer shape punching portion that punches out the outer shape of the core sheet from the steel sheet after the punching by the pre-processing portion, and
   wherein the recess and the vent are provided in the pre-processing portion.
[7] The manufacturing device for a laminated core according to [6], wherein the outer shape punching portion comprises a pressing portion that spreads the adhesive when punching out the outer shape of the core sheet.
[8] A manufacturing method for a laminated core, the method comprising manufacturing the laminated core using the manufacturing device according to any one of [1] to [7].

### [Description of Reference Numerals]

1: manufacturing device
2: steel sheet
3: core sheet
4: laminated core
14: adhesive applicator
140: adhesive
15: punching portion
150: pre-processing portion
151: outer shape punching portion
50: recess
51: vent
510: transverse hole
52: pressing portion
71: blank holder
710: base
711: surface layer
130: upper die
131: lower die

## Claims

1. A manufacturing device for a laminated core in which core sheets having a predetermined shape are formed by punching from a steel sheet and a predetermined number of the core sheets are laminated and bonded, the manufacturing device comprising:
an adhesive applicator that applies an adhesive to portions of the steel sheet corresponding to the core sheets;
a punching portion comprising a die including an upper die and a lower die, the punching portion being configured to punch out the core sheets from the steel sheet after the adhesive has been applied by the adhesive applicator,
wherein the upper die or the lower die comprises a recess disposed at a position corresponding to a portion where the adhesive has been applied, and a vent that communicates an internal space of the recess with the outside of the upper die or the lower die.

2. The manufacturing device for a laminated core according to claim 1,
wherein the upper die or the lower die comprises a blank holder pressed against the steel sheet, and a punching die that is provided so as to be displaceable relative to the blank holder and punches out the steel sheet after the blank holder has been pressed against the steel sheet, and
wherein the recess and the vent are provided in the blank holder.

3. The manufacturing device for a laminated core according to claim 2,
wherein the blank holder comprises a base and a surface layer detachably mounted on the base and pressed against the steel sheet, and
wherein the recess is provided in the surface layer, and at least a portion of the vent is provided in the base.

4. The manufacturing device for a laminated core according to claim 2, wherein the vent comprises a transverse hole extending in a direction intersecting a separation direction of the upper die and the lower die.

5. The manufacturing device for a laminated core according to any one of claims 1 to 4,
wherein the adhesive applicator applies the adhesive to an upper face of the steel sheet, and
wherein the recess and the vent are provided in the upper die.

6. The manufacturing device for a laminated core according to any one of claims 1 to 4, wherein the punching portion comprises a pre-processing portion that punches out portions other than an outer shape of the core sheet from the steel sheet in one or more steps, and an outer shape punching portion that punches out the outer shape of the core sheet from the steel sheet after the punching by the pre-processing portion, and
wherein the recess and the vent are provided in the pre-processing portion.

7. The manufacturing device for a laminated core according to claim 6, wherein the outer shape punching portion comprises a pressing portion that spreads the adhesive when punching out the outer shape of the core sheet.

8. A manufacturing method for a laminated core, the method comprising manufacturing the laminated core using the manufacturing device according to any one of claims 1 to 4.
